# EUROPEAN PATENT SPECIFICATION

(11) **EP 1 731 068 B1**
(45) Date of publication and mention of the grant of the patent: **03.10.2007**
(21) Application number: 06380001.5
(22) Date of filing: 02.01.2006
(51) Int. Cl.: A47J 43/046, A47J 36/16, A47J 27/00

(54) **Cocking mixer for processing and preparing food**
Küchenmaschine
Robot de cuisine

(30) Priority: 10.06.2005 EP 05380123
(43) Date of publication of application: 13.12.2006
(73) Proprietor: Electrodomesticos Taurus S.L., 25790 Oliana (Lleida) (ES)
(72) Inventor: Trench Roca, Lluis, 08650 Sallent (Barcelona) (ES); Heredia Ferrer, Juan Luis, 25790 Oliana (Lleida) (ES)
(74) Representative: Gislon, Gabriele

(56) References cited:
- DE-A1- 19 624 648
- FR-A- 2 498 069
- FR-A- 2 651 982
- US-A- 5 749 285
- US-A- 5 799 567
- US-A1- 2002 027 175
- PATENT ABSTRACTS OF JAPAN vol. 2003, no. 12, 5 December 2003 (2003-12-05) & JP 2004 261254 A (HITACHI HOMETEC LTD), 24 September 2004 (2004-09-24)
- PATENT ABSTRACTS OF JAPAN vol. 2002, no. 02, 2 April 2002 (2002-04-02) & JP 2001 275835 A (NAKAI:KK), 9 October 2001 (2001-10-09)

## Description

### Technical Field

The present invention relates to a food-cooking mixer for food processing and elaboration comprising driving means to rotate blades inside a container holding the food to be processed, heat energy transferring means to heat the food in the container, and weighing means to determine the weight of the food inside the container.

### State of the prior art

Food-cooking mixers also known as cooking blenders, comprising a support for a container, heating means, and stirring or cutting means to beat, chop and/or cook the food inside the container while it is being heated or cooked are well known in the prior art.

Patent FR-A-2651982 describes a food processor comprising a platform holding a support for a container and driving means to move a stirring or cutting blade device inside the container, the platform being supported on a base structure having weighing means, such as weight transducers. The weight of the food inside the container is obtained by an electronic circuit that subtracts the tare weight from the total measured weight. In this case, the tare weight includes the weight of the entire apparatus except the base structure.

Patent EP-A-0757532 describes a food-cooking mixer comprising a base structure with a support for a container, driving means to move a stirring or cutting blade device inside the container, and heating means to heat a lower region of the container. The apparatus further includes weighing means located between the base structure and the support to weigh the container with its contents resting on the support, the heating means being included in the weighing. The mentioned heating means comprise heat generating elements based on electric resistance that must be in direct contact with a portion of the container in order to efficiently transmit the generated heat to the container. This has several inconveniences. First the energy performance of the apparatus is not very efficient because part of the energy supplied to the heating means is consumed in heating the heat generating elements themselves. Moreover, the heating of the heat generating elements involves an undesired accumulation of heat inside the casing that has to be dissipated, for example, using a fan. On the other hand, control of the container temperature and that of the food it contains is complicated and not much precise due to the large mass of the heated elements, including the heating means, and to the very large thermal inertia of the complete assembly.

Additionally, the heating means by resistance in contact with the container forces to carry out the weighing including the weight of said heating means in the tare. A supply and control electronic circuit subtracts the tare from the weight in order to obtain the weight of the container contents. This construction has certain inconveniences concerning to the weighing accuracy. On the one hand, the proportion of the food inside the container is very low compared to the total measured weight or, equivalently, the tare weight is very high in relation to the weight of the container contents and this means that the intrinsic error of the weighing means has unfavourable repercussions on the precision of the weight of the container contents. On the other hand, it is difficult to prevent part of the heat generated by the heat generating elements from being transmitted also to the weighing means, which typically include sensors, such as weight transducers, including one of more extensiometric gauges that are very sensitive to expansion. Consequently the heat produced by the heating means can produce thermal expansion in the weight transducers that can distort the weighing values.

Patent US-A-6805312 describes a food-cooking mixer comprising a base structure with a container support, driving means to move a helicoidal blade device inside the container, and induction heating means arranged to heat the base of the container, said base being made of a ferromagnetic material. The mentioned support is constituted by a flat disc made of a material not heatable by induction supported over a flat induction coil. This appliance does not include any weighing means.

### Disclosure of the invention

The present invention contributes to mitigate the above and other inconveniences, providing a food-cooking mixer for food processing and preparation comprising a base structure on which a support is mounted, said support being adapted to hold a container containing food to be processed, driving means adapted to mover stirrers or blades inside said container, heat energy transferring means adapted to heat said food to be processed inside the container and weighing means to weight the container resting on the support. The food-cooking mixer according to the present invention is characterised in that the container comprises at least one ferromagnetic portion and said heat energy transferring means comprise at least one induction heater device installed on said base structure, said induction heater device being separated from the support and arranged at a predetermined distance form said ferromagnetic portion of the container; and in that said support is supported over said weighing means which are mounted on said base structure so that the weight of the induction heater device is excluded from the weighing.

Unlike with the electric resistance heater elements employed in food-cooking mixers, the electromagnetic induction heater devices do not have to be in contact with the body to be heated in order to produce efficient heating of the same, but instead they can be located at a predetermined distance from the body to be heated and even a body "transparent" to the electromagnetic waves may be interposed between the induction coil and the body to be heated, which has to be at least partly ferromagnetic, without the heating efficiency being affected. Moreover, an induction heater device provides a faster and more efficient heating than electric resistance heating elements, and greater energy performance leading to savings in energy.

The present invention takes advantage of these characteristics by attaching the induction heater device to the base structure so that the heater device is separate, not only from the container, but also from the container support. This enables the container to be supported on a weight transducer attached to the base structure in order to weigh the support with the container and its contents without including the weight of the heater device in the weighing. This layout provides better precision in the weight value of the food inside the container because the tare included in the weighing is less.

The mentioned predetermined distance at which the induction heater device is able to operate is between 0.5 and 6 cm with respect to the container outer surface, which permits, for example, to have the induction heater device in the form of a coil wrapped around a lower portion of the container, with a wall of the support being interposed between the coil and the container without any contact between the support and the heater device. The mentioned wrapping induction coil arrangement has several advantages. Firstly, for a jug-shaped container, the surface of the container that can be heated with said wrapping coil arrangement is greater compared to a flat coil arrangement underneath the base of the container. In addition, the wrapping coil arrangement is installed further away from the members of the movement transmission mechanism associated with the blades inside said container compared to a flat coil arrangement underneath the container base. Thanks to this, some of said members, such as shafts and bearings, can be advantageously made of a ferromagnetic material without any risk of them being heated by the induction heater device. A jug-shaped container is more suitable for housing operating blades inside than, for example, a lower, wider container, such as a pan or similar. However, the present invention includes the possibility of incorporating a flat coil device underneath the container base, especially when this is in the form of a pan.

Another particularity of induction heating is that the heater device itself is not heated, but only the ferromagnetic material of the container is heated. This produces less accumulation of heat inside the casing, which reduces the need for a forced ventilation to remove the heat from inside the casing and reduces the risk of burns to the user, and moreover it also reduces the risk of weighing errors due to thermal expansion of the weight transducers.

### A brief description of the drawings

The above and other advantages and characteristics will be more fully understood from the following detailed description of exemplary embodiments, with reference to the attached drawings, in which:
Fig. 1 is a general lateral elevation of the food-cooking mixer of the present invention according to a first exemplary embodiment;
Fig. 2 is a schematic cross-sectional lateral view illustrating the installation of driving means and heat energy transferring means in the food-cooking mixer of Fig. 1;
Fig. 3 is a lower perspective view of the food-cooking mixer of Fig. 1, without neither the base structure nor the casing to better show the main components;
Fig. 4 is a schematic cross-sectional lateral view illustrating the installation of driving means and heat energy transferring means in a food-cooking mixer according to a second exemplary embodiment of the present invention;
Fig. 5 is a schematic cross-sectional lateral view illustrating the installation of driving means and heat energy transferring means in a food-cooking mixer according to a third exemplary embodiment of the present invention;
Fig. 6 is a schematic cross-section lateral view illustrating the installation of driving means and heat energy transferring means in a food-cooking mixer according to a fourth exemplary embodiment of the present invention;
Fig. 7 is an exploded perspective view showing the container, the stirrers or blades and a base piece including a mechanism for holding or releasing the rotating stirrer or blade shaft applicable to any of the preceding exemplary embodiments;
Fig. 8 is a lower perspective view of the container, with the stirrer or blade shaft in the operating position and said base piece before being coupled to the container;
Fig. 9 is a lower perspective view of the container, with the base piece holding the stirrer or blade shaft;
Fig. 10 is a perspective view of the container with the container handle partially disassembled, and sensors that do not form part of the container but which are incorporated into the support (not shown in this figure);
Fig. 11 is an exploded perspective view of the container handle, and a portion of the cover;
Fig. 12 is an exploded perspective view of the same components shown in Fig. 11, but from a reversed viewpoint;
Fig. 13 is an upper plan view of the food-cooking mixer of Fig. 1, with the container cover removed and a basket fitted inside the container;
Fig. 14 is a perspective view of the basket of Fig. 13 and an accessory handle arranged to be coupled to the same;
Fig. 15 is a perspective view of the handle coupled to the basket;
Fig. 16 is a lateral view of the handle arranged to be coupled to a spatula tip;
Fig. 17 is a lateral view of the handle coupled to said spatula tip to form a scraping tool;
Fig. 18 is a perspective view of an upper tray, an accessory for steam cooking, adapted over the container instead of the cover; and
Fig. 19 is an exploded perspective view of the upper tray of Fig. 18 including an auxiliary steam cooking tray.

### Detailed description of exemplary embodiments

In the following description of various exemplary embodiments of the present invention, the same numeral references have been used to designate equal or equivalent elements.

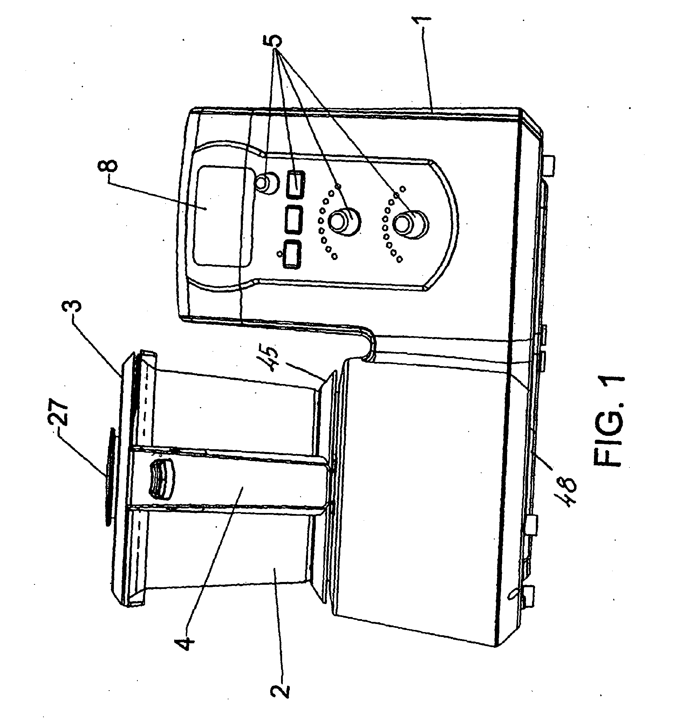

First referring to Figs. 1, 2 and 3, a food-cooking mixer for processing and preparing food according to an exemplary embodiment of the present invention is shown comprising a base structure 48 on which a support 49 is mounted to hold a container 2 adapted to contain food to be processed or prepared. The appliance comprises driving means adapted to rotate stirring or cutting means, such as stirrers or blades 10, which are installed to rotate around a rotating shaft 50 inside the container 2. The mentioned rotating shaft 50 is associated with container 2 and has one end connected to a first coupling element 51 projecting downwards through an aperture 12 formed in a dome-shaped bottom 61 of container 2. The container 2 includes a base piece 62 coupled exteriorly in a removable manner to said dome-shaped bottom 61, said base piece 62 serving for centring the container 2 in relation to the support 49. This base piece 62 includes a mechanism for holding or releasing the rotating shaft 50 in order to separate the stirrers or blades 10 from the container 2 as will be explained in detail below.

In the exemplary embodiment shown in Figs. 1, 2 and 3, the driving means comprise an electric motor 33, a driving pulley 32 secured to an output shaft of said motor 33, a driven pulley 28 connected to a transmission shaft 36 and a belt 35 connecting said driving pulley 32 to said driven pulley 28. The mentioned transmission shaft 36 is connected to a second coupling element 52 arranged in a suitable position for coupling to the mentioned first coupling element 51 of said rotating shaft 50 of the stirrers or blades 10 when the container 2 is resting on the support 49. In practice, when the container 2 is placed over the support 49, the first and second coupling elements 51, 52 become automatically coupled and when the container 2 is removed from the support 49, the first and second coupling elements 51, 52 are automatically uncoupled.

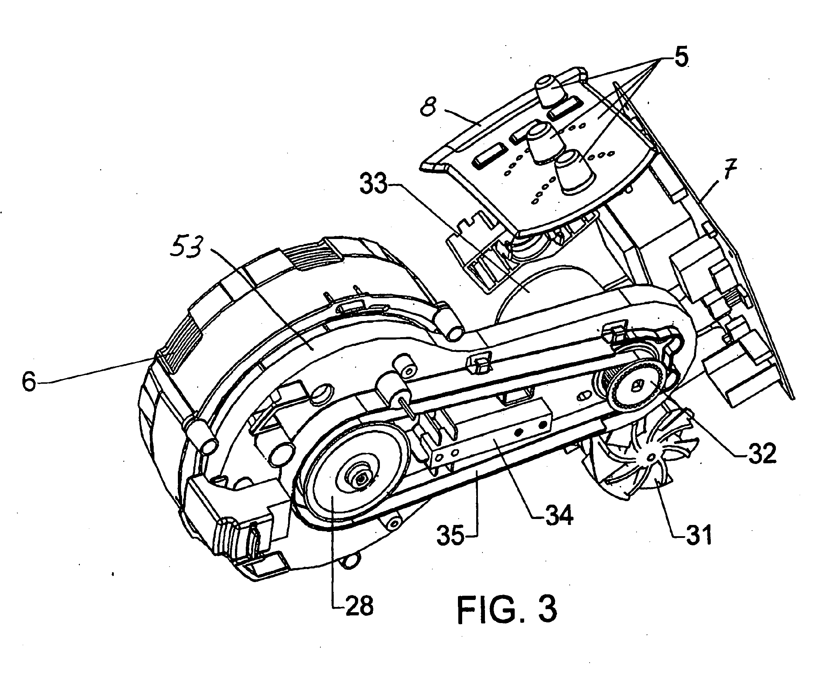

A casing 1 is mounted over said base structure 48, said casing 1 having an opening facing said support 49, through which the container 1 can be placed onto or removed from the support 49. The casing 1 also has an enclosure that contains part of the driving means and one or more printed circuit boards 7 (Fig. 3) that constitute a supply and control electronic circuit provided with at least one electronic microprocessor. In one preferred exemplary embodiment, the mentioned supply and control electronic circuit includes two microprocessors, one for control of induction heating means described below and another to control the remaining appliance functions. The supply and control electronic circuit is connected to controls 5 accessible from the outside and which form part of operation selection means associated with a display 8, for example in the form of a liquid crystal display LCD. The container 2 is provided with a handle 4 and has a ferromagnetic portion 22 in the form of an outer layer of ferromagnetic stainless steel 22 arranged on a lower, substantially cylindrical portion of the container 2. Preferably, a heat diffusion layer of aluminium alloy 21 is located between the container 2 and said outer layer of ferromagnetic stainless steel 22. The container 2 is closed by a cover 3 provided with a corresponding knob 27. This knob 27 can be removed to provide a service opening.

The food-cooking mixer of the present invention includes heat energy transferring means based on an induction heater device 6 mounted on the base structure 48 so that it surrounds the mentioned ferromagnetic portion 22 of the container 2 when the container 2 is fitted to the support 49. The mentioned induction heater device 6 comprises an electromagnetic field generating coil that is separate from the support 49 and arranged at a predetermined distance, for example, 0.5 to 6 cm, from said ferromagnetic portion 22 of the container 2. Preferably, the support 49 is in the shape of a substantially cylindrical jar adapted to receive the ferromagnetic portion 22 of the container 2, so that the side wall of support 49 is interposed between the ferromagnetic portion 22 of the container 2 and the induction heater device 6. Optionally, the food-cooking mixer may includes cooling means for cooling the container 2.

The food-cooking mixer also includes weighing means to weight the contents of container 2 while the container 2 is fitted to support 49. These weighing means comprise at least one weight transducer 34 mounted on the base structure 48, said weight transducer 34 holding the support 49. The mentioned weight transducer 34 includes, for example, an extensiometric gauge associated with a strong body secured at one of its ends to the base structure 48 and connected at the other of its ends to said support 49. Since the induction heater device 6 is separate from the support 49, the weight of the induction heater device 6 is excluded from the weighing performed by the weighing means, i.e., by said weight transducer 34.

In this first exemplary embodiment shown in Figs. 1 to 3, a single weight transducer 34 is fixed at one end to the base structure 48 and connected at the other end to a chassis 53 to which the support 49 is secured. The mentioned motor 33 with the corresponding driving pulley 32 and said transmission shaft 36 with the corresponding driven pulley 28 are mounted on the chassis 53 as well. Thus, the weight of all elements attached to the chassis 53, as well as the weight of the container 2 sustained on the support 49 and the weight of the container 2 contents is withstood by the weight transducer 34. Consequently, a weighing performed by the weight transducer 34 includes a tare value formed by the weight of the chassis 53, the motor 33, the transmission formed by the drive and driven pulleys 32, 28 and belt 35, the transmission shaft 36 and the support 49, in addition to the weight of the container 2. In order to determine the weight of the contents of container 2, the supply and control electronic circuit subtracts the mentioned tare weight from the total measured weight.

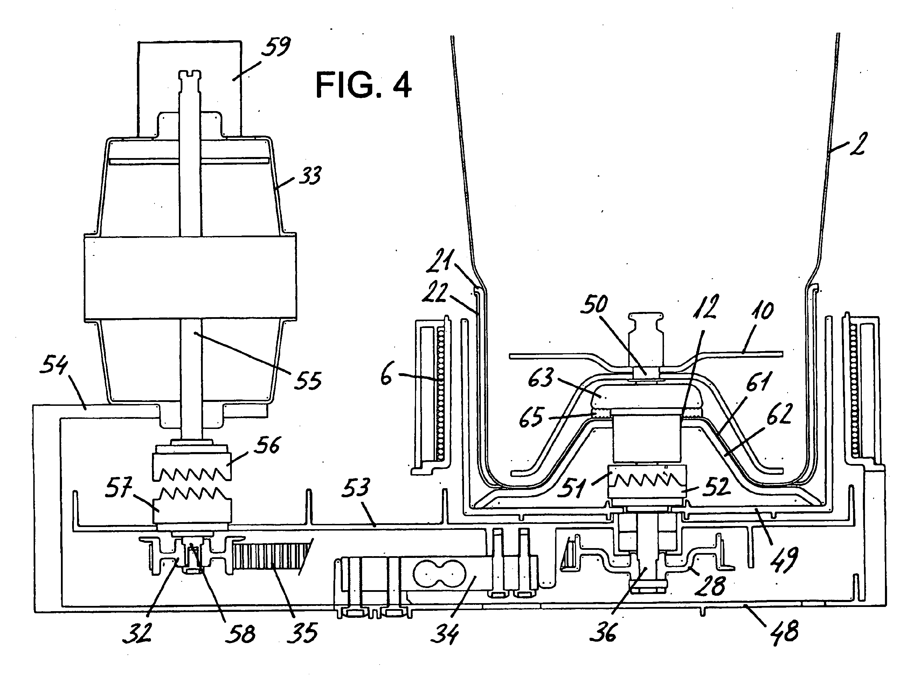

Fig. 4 shows a second exemplary embodiment in which, in an analogue way than the first exemplary embodiment, the weight transducer 34 is fixed at one end to the base structure 48 and connected at the other end to a chassis 53, to which the support 49 is secured. However, here the motor 33 is mounted on a support 54 fixed to the base structure 48, the motor 33 including an output shaft 55 that can be axially moved with respect to the motor casing 33. A first primary coupling element 56 is mounted on one end of the output shaft 55 and a driving device 59 is installed on an opposite end of the motor 33, said driving device 59 being adapted to change the position of said first primary coupling element 56 mounted on the output shaft 55 of the motor 33 between a retracted position (shown in Fig. 4) and an extended position (not shown). The corresponding driving pulley 32 is fixed to a primary shaft 58 mounted on the chassis 53. The mentioned primary shaft 58 has a second primary coupling element 57 fixed to one end facing said first primary coupling element 56.

In this second exemplary embodiment, the transmission shaft 36, with the driven pulley 28 and the second transmission element 52 are mounted on the chassis 53 and a belt 35 connects the driving and driven pulleys 32, 28 in a fashion similar to that described in relation to the first exemplary embodiment of Figs. 1 to 3. In this way, when the first primary coupling element 56 is moved to its extended position by the driving device 59, the first and second primary coupling elements 56, 57 become coupled and the movement of the stirrers or blades 10 inside the container 2 can be driven by the motor 33. On the other hand, when first primary coupling element 56 is moved to its retracted position by the driving device 59, the first and second primary coupling elements 56, 57 are uncoupled and the supply and control electronic circuit can perform a weighing operation using the weight transducer 34 without including neither the weight of the motor 33 nor the driving device 59 in the tare weight. As explained above, the weight of the induction heater device 6 is also not included in the tare.

For example, the motor 33 may have a rotor having a hollow shaft (not shown) through which the output shaft 55 is able to slide axially, and the driving device 59 (not shown in great detail) can include a spring to push the output shaft 55 towards the extended position and an electromagnet that can be energised to push the output shaft 55 towards the retracted position against the spring force, or vice versa.

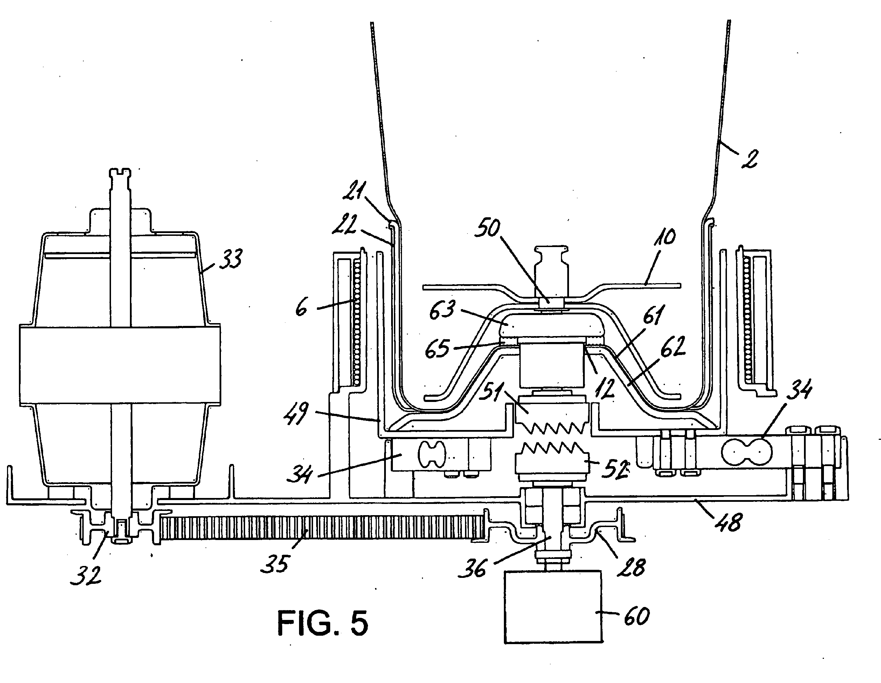

Fig. 5 illustrates a third exemplary embodiment in which the support 49 is mounted on three weight transducers 34 set at 120° angular intervals on the base structure 48, while the motor 33 with its corresponding driving pulley 32 and the transmission shaft 36 with its corresponding driven pulley 28 are installed on the base structure 48. In this third exemplary embodiment, the second coupling element 52 is mounted so that it can be axially moved in relation to the coupling shaft 36 and driving device 60 is provided to operate movements of the second coupling element 52 between a retracted position (shown in Fig. 5), in which the second coupling element 52 is uncoupled from the first coupling element 51 and an extended position (not shown), in which the second coupling element 52 is coupled to the first coupling element 51 when the container 2 is resting on support 49. The driving device 60 may be similar to the driving device 59 described above in relation to the second exemplary embodiment.

With this construction, when the second coupling element 52 is moved to its retracted position by driving device 60, the first and second coupling elements 51, 52 are uncoupled and the supply and control electronic circuit can perform a weighing operation using the weight transducers 34 without including neither the weight of the motor 33 nor the weight of the transmission formed by the drive and driven pulleys 32, 28 and the belt 35 nor the weight of the driving device 60 in the tare weight. As explained above, the weight of the induction heater device 6 is also not included in the tare. Consequently, in this third exemplary embodiment, the tare weight only includes the support 49 in addition to the weight of the container 2.

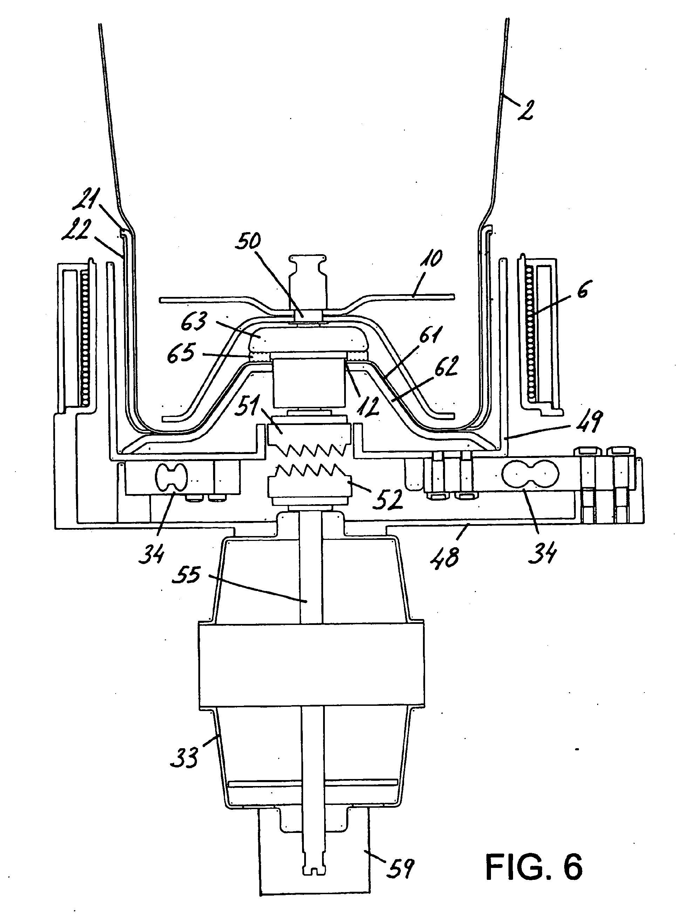

Fig. 6 shows a fourth exemplary embodiment of the invention, in which the support 49 is mounted on three weight transducers 34 arranged at 120° angular intervals on the base structure 48 and the motor 33 is also mounted on the base structure 48 in such a position that an output shaft 55 of the motor 33 is aligned with the rotating shaft 50 of the stirrers or blades 10 associated with container 2. The output shaft 55 of the motor 33 can be axially moved in relation to the casing of the motor 33 and the second coupling element 52 is fixed to one of the ends of output shaft 55. A driving device 59 is installed on an opposite end of the motor 33 and adapted to change the position of the second coupling element 52 between a retracted position (shown in Fig. 6) and an extended position (not shown). The mentioned output shaft 55 of the motor 33, and said driving device 59 can be similar to those described above in relation to the second exemplary embodiment shown in Fig. 4. Optionally, for better use of space, in the exemplary embodiment of Fig. 6, the motor 33 can be of the type that includes a relatively large-diameter rotor with a relatively short axial length.

In the extended position, the second coupling element 52 is arranged in such a position that it becomes coupled with the first coupling element 51 when the container 2 is positioned on the support 49, while when the second coupling element 52 is moved to its retracted position by the driving device 59, the first and second coupling elements 51, 52 are uncoupled. Thus, when the second coupling element 52 is in the retracted position, the supply and control electronic circuit can perform a weighing operation using the weight transducers 34 without including neither the weight of the motor 33 nor the driving device 59 in the tare weight. Since in this fourth exemplary embodiment the weight of the induction heater device 6 is also not included in the tare, the weighed tare weight only includes the support 49 in addition to the weight of container 2. Moreover, since in this fourth exemplary embodiment the functions of the transmission shaft are performed by the output shaft 55 of the motor 33, it is not necessary to incorporate a mechanical transmission and the construction is simpler and more economical.

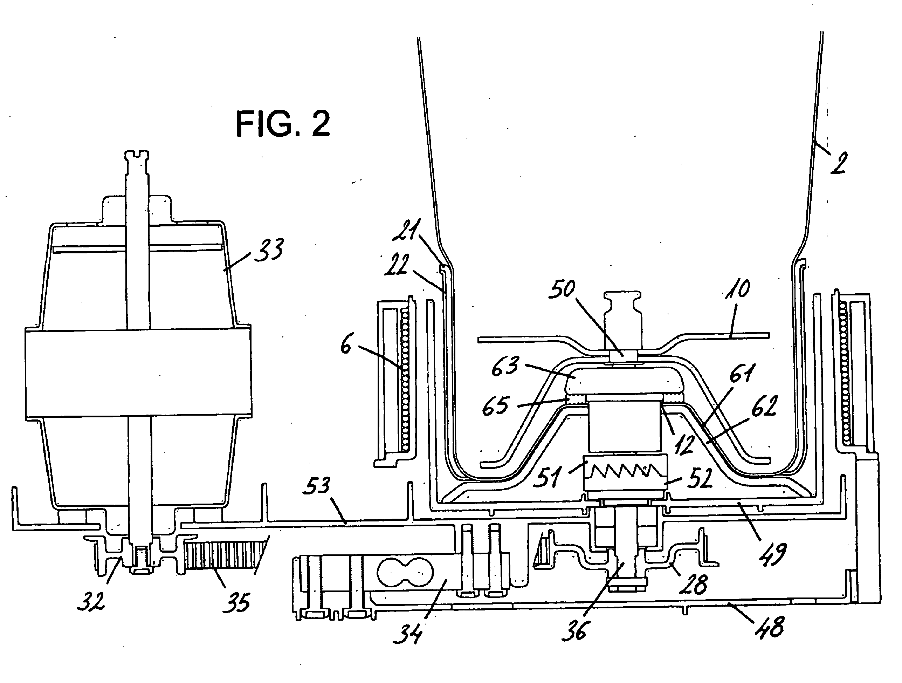

It should be pointed out that, in principle, there is no limit for the number of weight transducers 34 connected to the support 49 or the chassis 53 to perform the weighing operation. In fact, in the first and second exemplary embodiments shown in Figs. 2 and 4, only one weight transducer 34 is installed connected to the chassis 53 at a point midway between the support 49 and the motor 33 or primary shaft 58. In this case, the supply and control electronic circuit performs a calculation based on the reading of the weight transducer 34, from which is subtracted the tare including the weight of the container 2. However, in the third and fourth exemplary embodiments shown in Figs. 5 and 6, three weight transducers 34 are installed for better balance, which are directly connected to the support 49 at regular intervals around and at equal distances from the transmission shaft 36. In this case, the supply and control electronic circuit performs a calculation based on the combined readings of the weight transducer 34 with subtraction of the tare including the weight of the container 2. However, any other number of weight transducers in any other arrangement is also possible. In any case, the net weight value of the food inside the container 2 is shown on the display 8.

The weighing means allow various weighing operations during food cooking or once it is completed, but the reading of the weight transducer 34 is always taken with the motor 33 stopped, i.e., when there are neither masses in movement nor vibration that could cause errors in the cited weighing.

One outstanding feature of the present invention is that, according to a preferred exemplary embodiment, it only includes one fan 31 (Fig. 3) in a region inside the casing 1 where the motor 33 and the printed circuit 7 are located. On the contrary, in a region inside casing 1 where the induction heater device 6 is located, a fan is not necessary because the induction heater device 6 does not radiate heat as do the previous art resistance heater devices, but instead an electromagnetic field that heats the ferromagnetic portion 22 of container 2.

The operating frequency of the induction heater device 6 lies preferably between 10 and 40 kHz and the supply and control electronic circuit controls the heating power by a signal chopping system. Unlike other food-cooking mixers of the prior art, such that described in patent EP-A-0757529, in which the control device varies the heating power as a function of a container heating ramp, in the present invention the power supplied to the induction heater device 6 is constant and temperature is controlled by chopping the signal, i.e., by pulses.

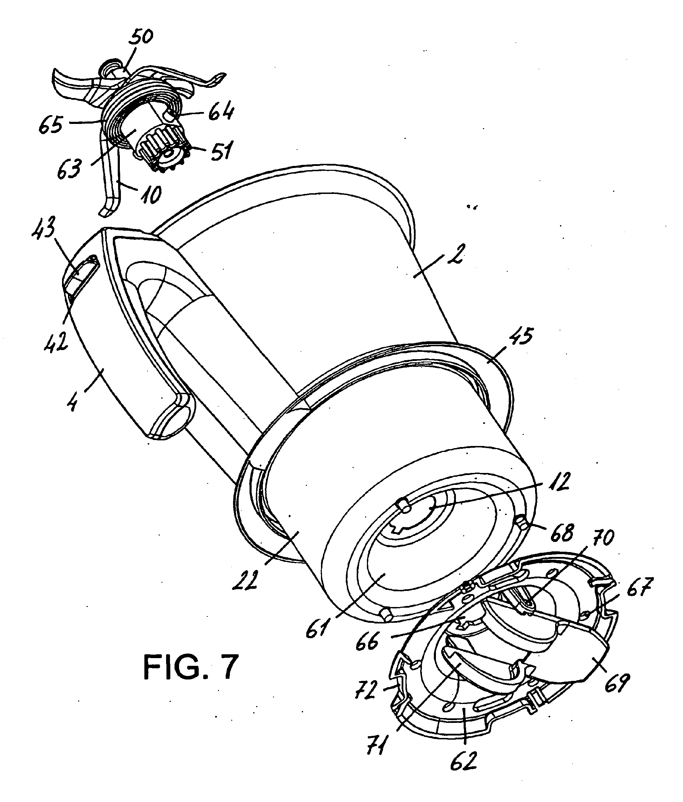

Now referring to Fig. 7, this shows the container 2, a separate stirring or cutting assembly including a support body 63 carrying the rotating shaft 50 on which the stirrers or blades 10 are mounted and the first coupling element 51, as well as said movable base piece 62 adapted to be coupled to the dome-shaped bottom 61 of the container 2, and which houses a mechanism to secure or release the mentioned stirring or cutting assembly to or from the container 2. The support body 63 of the stirring or cutting assembly has a lower portion from which two diametrally opposite journals 64 project radially, and an upper portion that defines a step on which a sealing ring 65 is fitted. The opening 12 in the dome-shaped bottom 61 of the container 2 has a contour that allows the mentioned lower portion of the support body 63 to pass through with the mentioned journals 64 until said sealing ring 65 fitted in the step of said upper portion of the support body 63 makes contact with a region of the apex of the dome-shaped bottom 61 of the container 2 around the aperture 12.

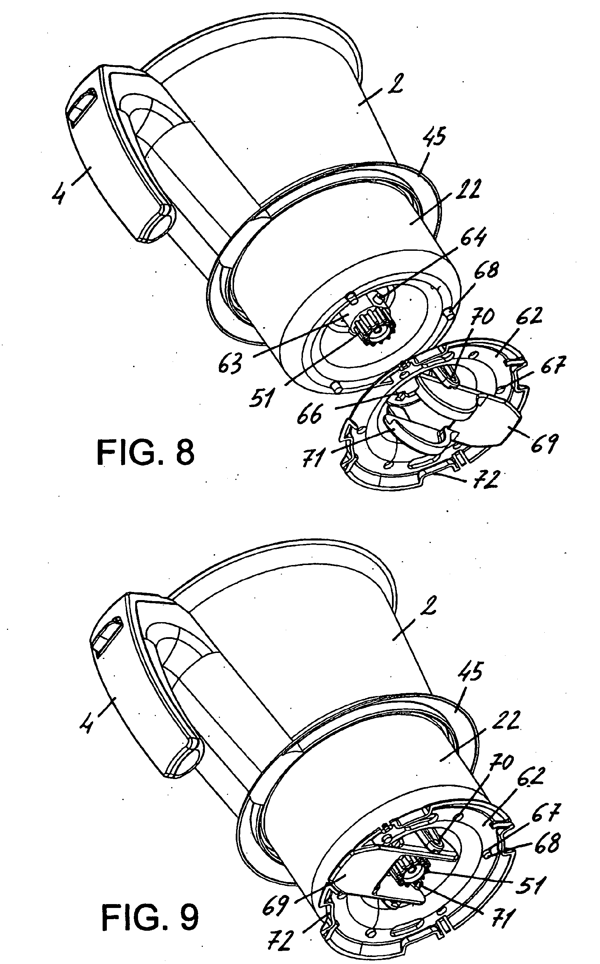

Fig. 8 shows the stirring or cutting assembly located inside the container 2, with the lower portion of the support body 63 passed through the opening 12 at the bottom of container 2. In this position, the two journals 64 fixed to the support body 63 and the first coupling element 51 joined to the lower end of the rotating shaft 50 project from the lower side of the apex of the dome-shaped bottom 61 of the container 2, but without projecting out from inside the space defined by the dome-shaped bottom of the container 2. The base piece 62 has a central opening 66 having a contour conjugated with that of the opening 12 in the bottom of the container 2 and holes 67 adapted to receive studs 68 that project downwards from the bottom of container 2 when the base piece 62 is coupled to the container 2. The coupling of the studs 68 in the holes 67 ensures a correct position of the base piece 62 with respect to the container 2 and the stirring or cutting assembly. The base piece 62 also has notches 72 around its periphery adapted to cooperate with interior projections (not shown) of support 49 in order to produce a bayonet lock that guarantees the securing of the container 2 on the support 49 at a predetermined angular position.

In a lower hollow space of the base piece 62 a lever 69 is mounted so that it can rotate with respect to a shaft 70 that is perpendicular to the rotating shaft 50 of the stirring or cutting assembly in order to rotate between an open position (Figs. 7 and 8) and a closed position (Fig. 9). On one side of the mentioned lever 69 are a pair of curved cams 71 adapted to engage the two journals 64 of the stirring or cutting assembly when the base piece is coupled to the container 2 and the lever 69 is rotated half a turn from the open position to the closed position. The engagement of the journals 64 with the cams 71 secures the support body 63 of the stirring or cutting assembly in an operating position within the container 2 and the sealing ring 65 is pressed between the support body step and the bottom of the container 2.

Fig. 9 shows the stirring or cutting assembly secured inside the container 2 by the cams 71 of the base piece mechanism 62. The lever 69 comprises a passageway between the cams 71 so that, in the closed position shown in Fig. 9, said passageway allows access to the first coupling element 51 so as it can become coupled with the second coupling element 52 when the container 2 is fitted in place on the support 49. A one-half turn of the lever 69 from the closed position to the open position allows the stirring or cutting assembly to be extracted and the base piece 62 separated from the container 2, for example, to facilitate container cleaning.

Figs. 7 to 9 also show the handle 4 of container 2, and an annular screen 45 projecting out of the container 2 and surrounding it just above the ferromagnetic covering 22. The mentioned annular screen 45 contributes to close the upper part of a gap existing between the opening of the casing 1 and the inside of support 49 when the container 2 is positioned on the support 49 (Fig. 1) thus preventing any possible liquid splashes or solid particles from entering to the heating means during cooking. The container 2 has a lower cylindrical portion and an upper portion that becomes wider and modified as it is further from the lower portion until it defines an oval cross-section at the mouth of said container 2, a geometrical centre of said oval form being aligned with the geometric axis of said lower cylindrical portion.

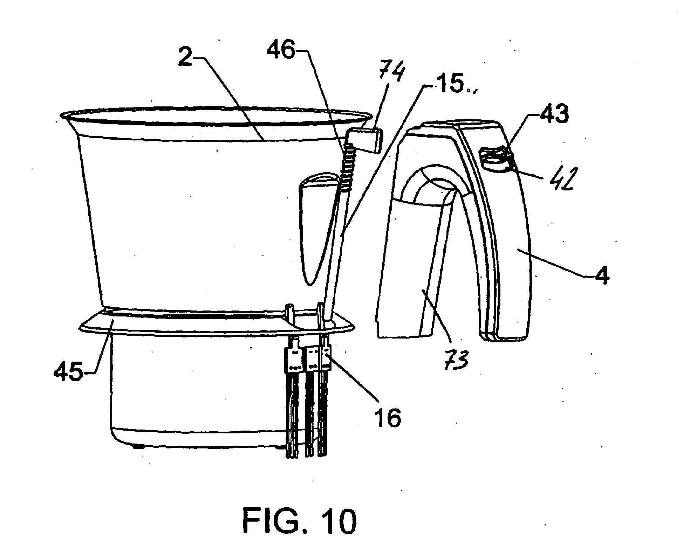

In relation to Figs. 10, 11 and 12, safety means are next described, said safety means being provided to prevent any negative effects in the case of accidental or inadequate opening of the cover 3 or the container 2 or, in other words, to prevent the operation of the driving means and/or heat energy transferring means if said cover 3 is not correctly fitted closing the container 2 in a pre-determined manner. Fig. 10 shows the container 2 with the handle 4 separated. Next to the annular screen 45 of the container 2 are shown Hall effect sensors 16 which are actually mounted on the side wall of the support 49 and which, in relation to the container 2 adopt the position shown in Fig. 10 when the container 2 is sustained on the support 49. The handle 4 has a securing portion 73 adapted to be fixed to the outside wall of the container 2. Inside said securing potion 73 of handle 4 a guide configuration 80 is formed on which are mounted a pair of magnetic rods 15 (only one of which is shown in Fig. 10) that can slide downwards parallel to the body of the container 2 against the thrust of respective springs 46 to a position in which lower ends of the magnetic rods 15 are sufficiently close to said Hall effect sensors 16 to be detected. The fact that two magnetic rods 15 and two corresponding Hall effect sensors 16 are incorporated is a redundant safety measure, since a single magnetic rod and a single Hall effect sensor would be sufficient.

Obviously, it is only necessary for the lower ends of the magnetic rods 15 closest to the Hall effect sensors 16 to be magnetic. Alternatively, other detector devices may be employed, such as micro switches arranged so that they can be operated by the thrust of conventional rods installed in place of the magnetic rods 15.

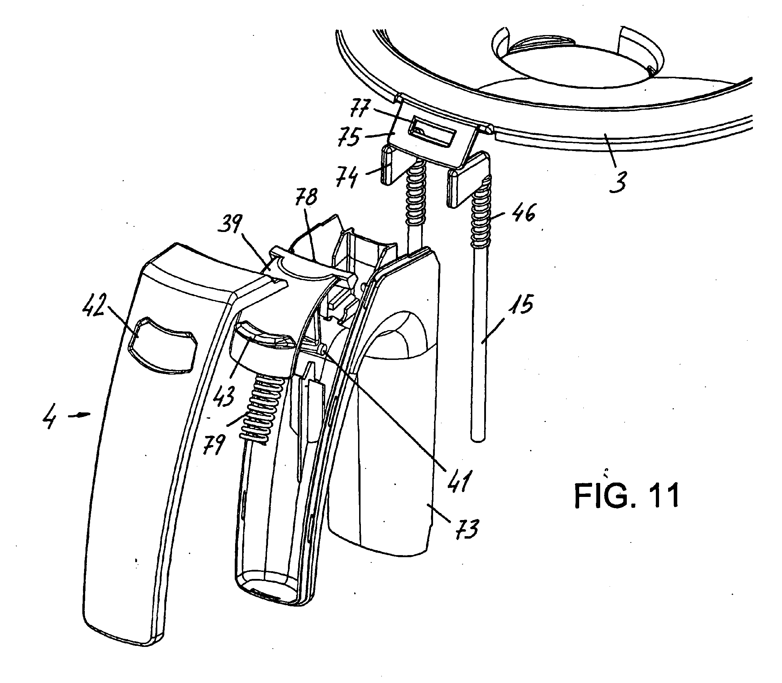

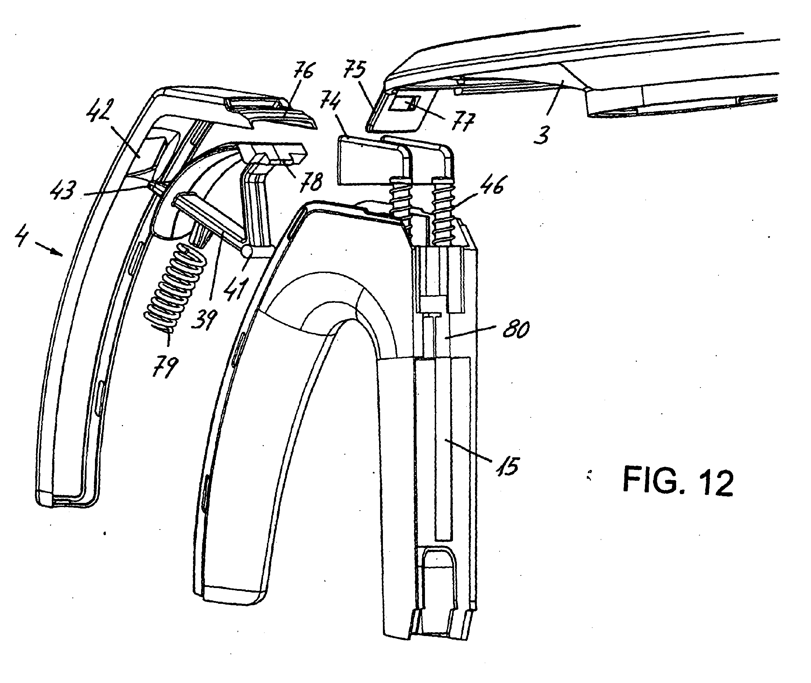

As shown in Figs. 11 and 12, the body of handle 4 is hollow and is comprised by two coupled pieces, inside of which the magnetic rods 15 are housed in a guided manner. Each magnetic rod 15 terminates at the top in a fin 74 housed inside the upper section of the handle 4. The cover 3 (partially shown in Figs. 11 and 12) has an appendage in the form of a pusher tab 75 which, when the cover is coupled to the upper part of the container 2, can be inserted through a slot 76 formed therebetween pieces of the handle 4 to make contact with said fins 74 and thereby push the magnetic rods 15 downwards against the force of the springs 46 to the position in which they are detected by the Hall effect sensors 16. In the mentioned pusher tab 75 an aperture 77 is formed into which a catch pawl 78 is latched, said catch pawl 78 being joined to a movable piece 39 mounted inside the handle 4 so as to be able to pivot over a pivot shaft 41 between a retention position, in which said pawl 78 is latched in the aperture 77 of the pusher tab 75 to retain the cover 3 in a closed position, and a released position, in which the pawl 78 is separated from the pusher tab 75. A spring 79 is disposed to permanently push the mentioned movable piece 39 towards its retention position. One of the pieces forming the handle 4 has an aperture 42 through which a trigger 43 formed in the movable piece 39 projects. Thus, the trigger 43 can be pressed against the thrust of the mentioned spring 79 to unlatch the pawl 78 from the aperture 77 in the pusher tab 75 to release the cover 3 and permit the cover to be removed from the container 2.

Preferably, an area of the movable piece 39 close to the catch pawl 78 presents an inclined plane on which one end of the pusher tab 75 impinges when the cover 3 is fitted to the container 2. Thus, the force exerted by the pusher tab 75 on said inclined plane makes the movable piece 39 briefly pivot and then the spring 79 returns the movable piece to the retention position to latch the catch pawl 78 in the aperture 77 of the pusher tab 75 without any need to operate the trigger 43. However, when it is desired to remove the cover 3, it is necessary to operate the trigger 43. In an area of the cover 3 opposite the pusher tab 75, there is an encasing configuration (not shown) that engages a portion of the edge of the container 2 mouth opposite the handle 4 to prevent any movement of the cover 3 when it is closed and with the pusher tab 75 retained by the pawl 78.

As soon as the trigger 43 has been pressed, the pawl 78 is uncoupled from the aperture 77 of the pusher tab 75 and the force of the springs 46 pushes the magnetic rods 15 upwards. With this, the fins 74 expulse the pusher tab 75 of the cover 3 outside the slit 76. At the same time, on moving upwards, the magnetic rods 15 are no longer detected by the Hall effect sensors 16. The supply and control electronic circuit is in connection with the Hall effect sensors 16 and adapted to stop the motor 33 as well as to switch off the induction heater device 6 when the magnetic rods 15 are no longer detected. Alternatively or simultaneously, the supply and control electronic circuit is adapted to show an error message on the control display 8.

In other words, the supply and control electronic circuit only permits operation of the motor 33 and the induction heater device 6 when the cover 3 is correctly fitted on the container 2, based on a detection signal provided by the Hall effect sensors 16. As an additional safety device, the supply and control electronic circuit is adapted to operate an electromagnetic braking device able to completely stop rotation of the motor 33 within a pre-determined time, for example, in less than 0.3 seconds after detection of the opening of the cover 3.

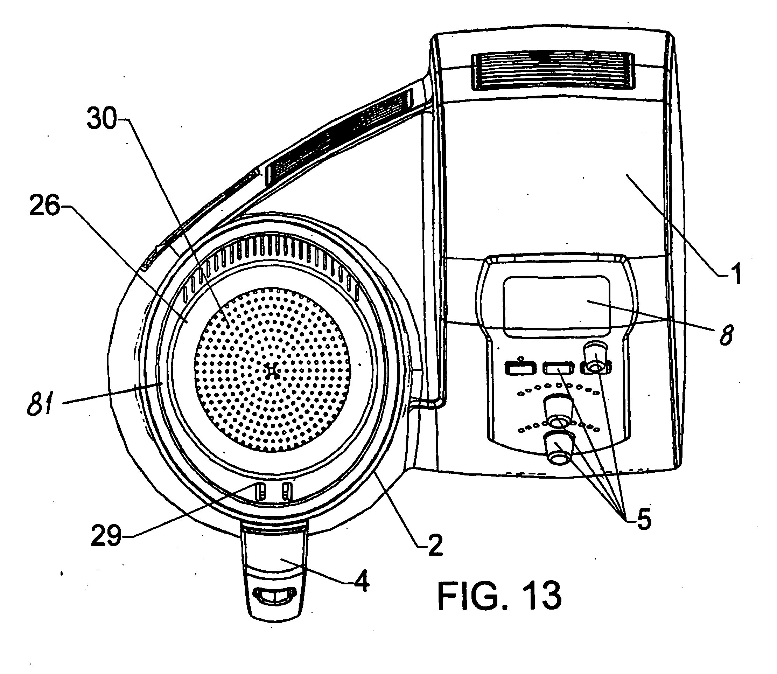

Fig. 13 shows an upper view of the food-cooking mixer of the present invention showing the casing 1 with the controls 5, display 8 and the access opening to the support 49 on which the container 2 is installed, the cover 3 being removed from de container 2 meaning it is a non-operational condition. The lack of cover serves to show the mouth of the container 2, which has an oval form and a basket 26 that can be placed inside the container 2. The mentioned basket 26 is useful as a filter or for steam cooking food contained in the same. The cover 3 can be fitted to the container 2 in the way described above when the basket 26 is placed inside the container 2.

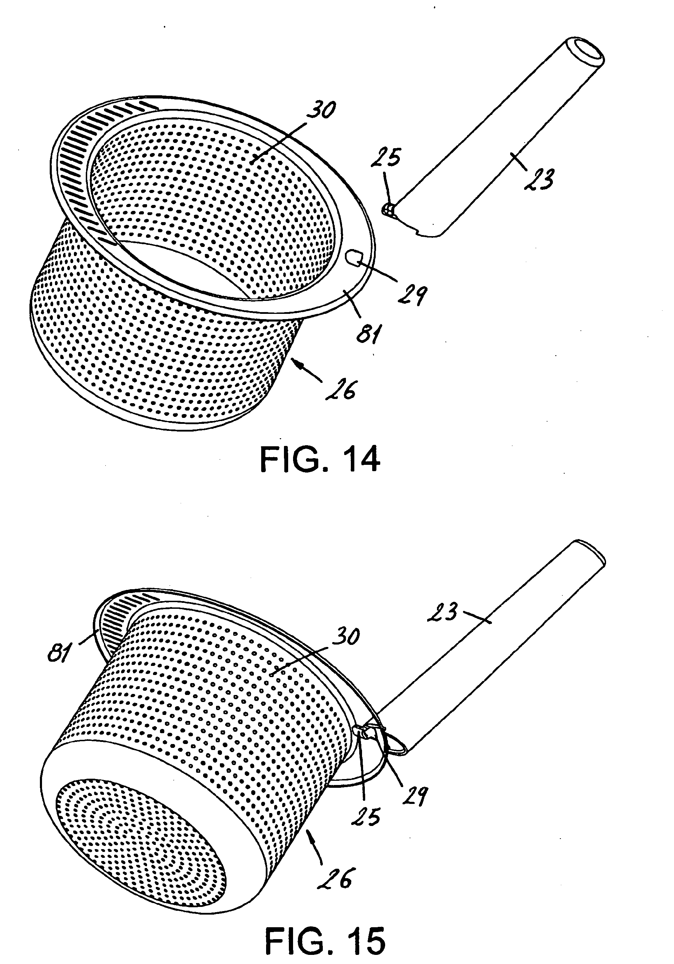

Fig. 14 shows the mentioned basket 26 comprising a side wall and a bottom provided with a large number of holes 30, and a flange 81 that extends outwards from around its mouth. The mentioned flange 81 is adapted to be supported on the mouth of the container 2 so that the bottom of the basket 26 is above the stirrers or blades 10 and cannot interfere therewith. The flange 81 includes a notch 29 that is adapted to receive a latch configuration 25 formed at the end of an accessory handle 23. As shown in Fig. 15, the mentioned latch configuration 25 becomes trapped in said notch 29 on the flange 81 of the basket 26 so that the basket can be placed inside or taken out of the container 2 easily and safely using the handle 23. The latch configuration 25 of notch 29 can be easily released by inclining the handle 23 towards the centre of the basket 26.

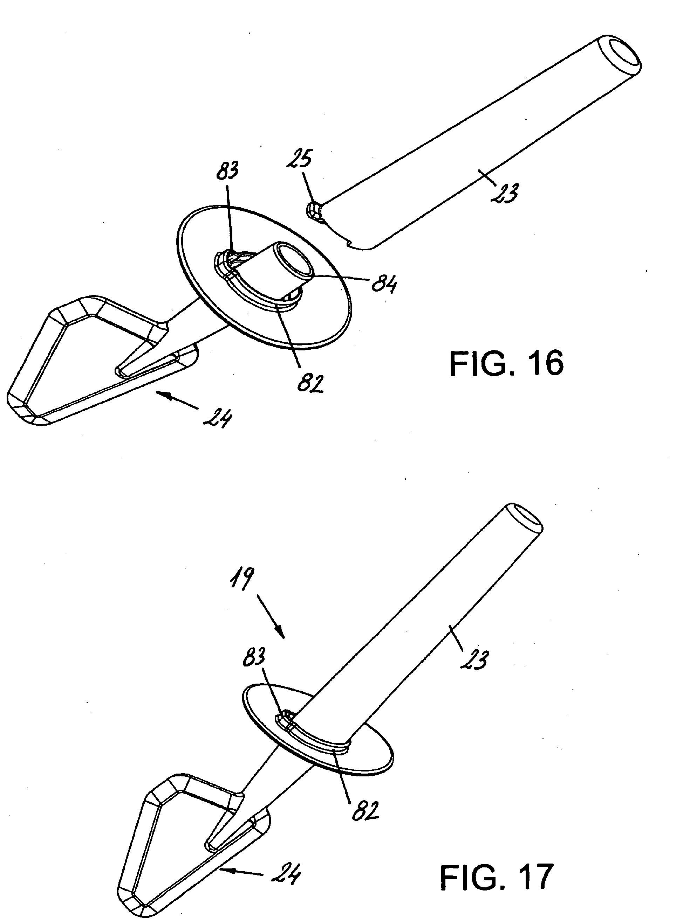

Fig. 16 shows the same handle 23 arranged to be coupled to a spatula tip 24 to form a spatula assembly that can be used to scrape the inside wall of the container 2 or to stir the contents of the container 2. To this end, the mentioned spatula tip 24 has a prominence 84 adapted to fit into an open end of the handle 23 and a rib 82 formed around said prominence 84 to receive an edge of said open end of the handle. The cited rib 82 defines a mortise 83 adapted to receive the mentioned latch configuration 25 of the handle 23. The coupling between the handle and spatula tip is made simply by pressure plug. Fig. 17 shows the assembled spatula assembly 19 comprised of the handle 23 coupled to the spatula tip 24.

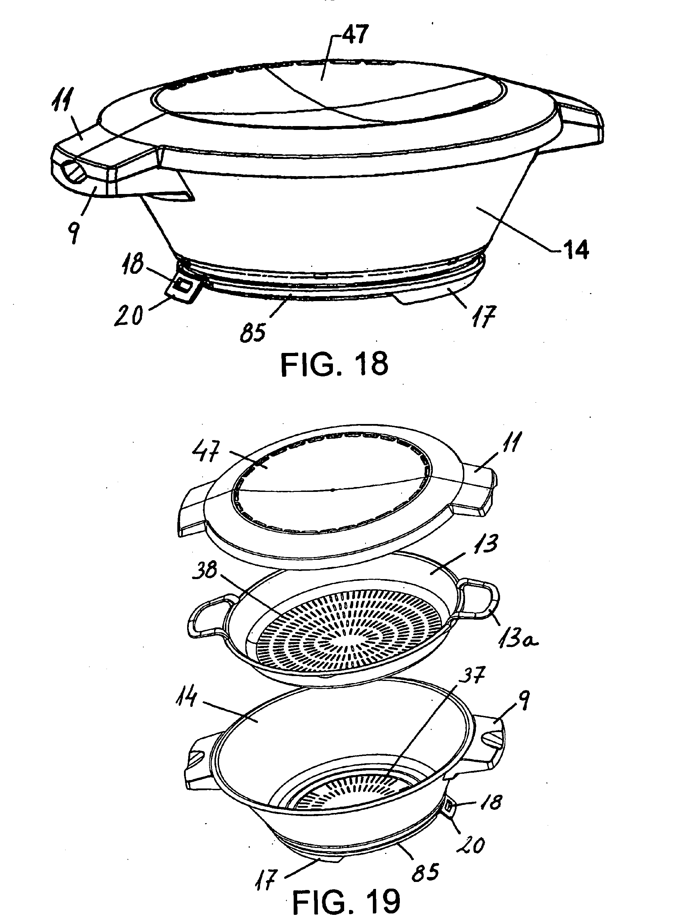

Fig. 18 shows an accessory steam cooking tray 14 provided with a tray cover 47. This steam cooking tray 14 is adapted to be fitted over the container 2 in place of the cover 3 and, since the mouth of container 2 is oval, for example, an ellipse, the steam cooking tray 14 has a base with a conjugated oval shape and an inclined side wall that determines an oval-shaped upper mouth that is more elongated than the oval shape of the base. Around the base of the steam cooking tray 14 a coupling piece 85 is attached, said coupling piece 85 defining at one end an appendage in the form of a pusher tab 20, similar to pusher tab 75 of the cover 3 described above in relation to Figs. 11 and 12. Consequently, the mentioned pusher tab 20 of the steam cooking tray 14 is suitable for driving the magnetic rods 15 housed inside the handle 4 of the container 2, so that the same safety measures associated with the placing of the cover 3 also apply to the fitting of the steam cooking tray 14. Moreover, the pusher tab 20 of the steam cooking tray 14 has an opening 18 similar to the opening 77 of the pusher tab 75 of the cover 3, so that the pusher tab 20 of the steam cooking tray 14 can be retained by the pawl 78 of the movable piece 39 housed inside the handle 4 of container 2. In an area of the coupling piece 85 opposite the pusher tab 20 is a casing configuration 17 that is also similar to the casing configuration (not shown) of the cover 3. This casing configuration 17 cooperates with the pusher tab 20 to prevent accidental or undesired opening of the steam cooking tray 14 when the same is operationally fitted to the mouth of container 2.

The bottom of the steam cooking tray 14 includes apertures 37 to allow the steam coming from inside the container 2 to enter the steam cooking tray 14 and to allow a liquid produced by steam condensation inside the steam cooking tray 14 to return inside the container 2. In this way, it is possible to steam cook food, for example, fish in the steam cooking tray 14 by using steam produced by boiling a liquid, such as water or broth in the container 2 or even by the steam produced by cooking other food in the container 2.

As better shown in Fig. 19, the steam cooking tray 14 has, at opposite ends, a pair of handles 9, on which a corresponding pair of handles 11 of the tray cover 47 rest. Optionally, an auxiliary steam cooking tray 13 can be fitted inside the steam cooking tray 14, said auxiliary steam cooking tray 13 having a lesser depth and including a bottom with apertures 38 to let steam pass through. This auxiliary steam cooking tray 13 has a corresponding pair of handles 13a adapted to be supported on the handles 9 of the steam cooking tray 14 and which are covered by the handles 11 of the tray cover 47. Thus, the bottom of the auxiliary steam cooking tray 13 is sufficiently separated from the bottom of the steam cooking tray 14 to allow simultaneous cooking of food in both.

In one exemplary embodiment, the supply and control electronic circuit includes a memory holding, for example, various cooking programs that can be selected by means of the controls 5 of the operation selection means. The display 8, located on casing 1, can show, for example, a list of stored programs, characteristics of each program, indications to facilitate the use of the programs or appliance, the selected program or execution phase of a currently running program. Similarly, the controls 5 allow programming times, temperatures, and rotational speeds of stirrers or blades 10 apart from the stored programs or to design and save programs. The mentioned memory may be an internal memory or a memory integrated into a removable, interchangeable module.

In another exemplary embodiment, the internal or removable memory can hold an electronic recipe book in the form of user-selectable programs that can be executed by the supply and control electronic circuit.

In another exemplary embodiment, the supply and control electronic circuit also includes a communication module adapted for connection to a computer or network for locating and downloading digital recipe programs that can then be executed by the supply and control electronic circuit. In a similar way, the programs stored in the supply and control electronic circuit memory can be uploaded to a computer or network via the communication module.

Depending on the program, the supply and control electronic circuit is prepared to control the maximum heating temperature inside the container 2, which could vary between 100°C and 190°C, for example, in cooperation with at least one temperature sensor (not shown on the drawings). The supply and control electronic circuit has a programmed minimum heating temperature, which, as a guide, is around 40°C. However, the food-cooking mixer can execute cold food processing programs, such as ice-cream or milkshakes that are below the minimum temperature of 40°C and the mixer can even include an optional cooling device to cool the container 2.

Those skilled in the art would be able to introduce variations and modifications to the described and illustrated exemplary embodiments without leaving the scope of the present invention, which is described in the attached claims.

## Claims

1. A food-cooking mixer for the processing and preparation of food, of the type comprising:
a base structure (48) on which is mounted a support (49) adapted to sustain a container (2) containing food to be processed;
motorised driving means adapted to rotate removable stirring or cutting means inside said container (2);
heat energy transferring means adapted to heat said food to be processed inside the container (2); and
weighing means for weighing the container (2) and its contents sustained on said support (49),
**characterised in that:**
the container (2) comprises at least one ferromagnetic portion (22) and said heat energy transferring means comprise one induction heater device (6) mounted on said base structure (48), said induction heater device (6) being separated from the support (49) and arranged at a predetermined distance from said ferromagnetic portion (22) of the container (2); and **in that**
said support (49) is sustained on said weighing means, which are mounted on said base structure (48), so that the weight of the induction heater device (6) is excluded from the weighing.

2. A food-cooking mixer according to claim 1, **characterised in that** said stirring or cutting means comprise stirrers or blades (10) mounted to rotate with a rotating shaft (50) inside the container (2), said rotating shaft (50) being connected to a first coupling element (51) projecting downwards through an aperture (12) in the bottom of container (2), said driving means comprising a motor (33) adapted to rotate a transmission shaft (36) having one end connected to a second coupling element (52) able to engage said first coupling element (51) of the rotating shaft (50) when the container (2) is sustained on the support (49).

3. A food-cooking mixer according to claim 2, **characterised in that** said motor (33), said transmission shaft (36) and a mechanical transmission (28, 32, 35) for connection between them are mounted on a chassis (53) to which the support (49) is attached, said second coupling element (52) being arranged in a position suitable to engage the mentioned first coupling element (51) when the container (2) is sustained on the support (49) and said chassis (53) is supported on said weighing means.

4. A food-cooking mixer- according to claim 2, **characterised in that** said motor (33) is mounted on a support (54) fixed to the base structure (48), while a primary shaft (58), said transmission shaft (36) and a mechanical transmission (28, 32, 35) for connection therebetween are mounted on a chassis (53) secured to the support (49), said second coupling element (52) being arranged in a position suitable to engage the mentioned first coupling element (51) when the container (2) is sustained on the support (49) and said chassis (53) is supported on said weighing means, primary coupling means (56, 57) being provided driven by a driving device (59) to couple and uncouple an output shaft (55) the motor (33) to and from said primary shaft (58).

5. A food-cooking mixer according to claim 4, **characterised in that** said primary coupling means (56, 57) comprise first and second primary coupling elements (56, 57) connected to said output shaft (55) of the motor (33) and to the primary shaft (58), respectively, at least one of said first and second primary coupling elements (56, 57) being mounted so that it can axially be moved by said driving device (59) for coupling and uncoupling to and from the other of the first and second primary coupling elements (56, 57).

6. A food-cooking mixer according to claim 2, **characterised in that** said motor (33), said transmission shaft (36) and a mechanical transmission (28, 32, 35) for connection therebetween are mounted on said base structure (48), said second coupling element (52) being axially movable in relation to the coupling shaft (36) and driven by a driving device (60) for coupling and uncoupling the first and second coupling elements (51, 52).

7. A food-cooking mixer according to claim 2, **characterised in that** said motor (33) is mounted on said base structure (48) with an output shaft (55) of the motor (33) being aligned with the rotating shaft (50) of said stirrers or blades (10) when the container (2) is sustained on the support (49), said second coupling element (52) being coaxially connected to said output shaft (55) of the motor (33), at least one of said first and second coupling elements (51, 52) being mounted to be axially moved by said driving device (59) for coupling to and uncoupling from the other of the first and second coupling elements (51, 52).

8. A food-cooking mixer according to claim 2, **characterised in that** said rotating shaft (50) for the stirrers or blades (10) is mounted on a removable support body (63) and together with the first coupling element (51) form a removable stirring or cutting assembly adapted to be secured inside the container (2) by a cam mechanisms housed in a base piece (62) adapted to be removably exteriorly connected to the bottom of the container (2).

9. A food-cooking mixer according to claim 8, **characterised in that** the support body (63) has a lower portion from which at least two diametrally opposite journals (64) radially project, and an upper portion defining a step on which a sealing ring (65) is fitted, said lower portion of the support body (63) with said journals (64) and one end of the rotating shaft (50) carrying the first coupling element (51) being passed through said aperture (12) of the container (2), and said upper portion of the support body (63) with said sealing ring (65) being in contact with a region at the bottom, of the container (2) around the aperture (12) when said stirring or cutting assembly in installed in an operating position inside the container (2).

10. Food-cooking mixer according to claim 9, **characterised in that** said cam mechanism comprises a lever (69) mounted on said base piece (62) so that it can rotate with respect to a shaft (70) perpendicular to the rotating shaft (50) of the stirring or cutting assembly between an open position and a closed position and a pair of cams (71) coupled to said lever (69) in such a position that, when the base piece (62) is coupled to container (2) and the lever (69) is rotated from said closed position, said pair of cams (71) engage the two journals (64) of the stirring or cutting assembly holding the support body (63) in an operating position inside the container (2) and press the sealing ring (65) between the support body (63) and the bottom of the container (2), and when the lever (69) is rotated from the closed position to the open position, the pair of cams (71) release the two journals (64) thereby the stirring or cutting assembly can be extracted and the base piece (62) separated from the container (2).

11. Food-cooking mixer according to claim 10, **characterised in that** the lever (69) has a passageway formed between the cams (71), said passageway permitting, when the lever (69) is in the closed position, an access to the first coupling element (51) thereby the first coupling element (51) can engage the second coupling element (52) when the container (2) is fitted to the support (49).

12. Food-cooking mixer according to claim 1, **characterised in that** the container (2) incorporates a cover (3) and safety means that cooperate with an appendage of said cover (3) to prevent operation of the driving means and/or heat energy transferring means if the cover (3) is not fitted to close the container (2) in a predetermined manner.

13. Food-cooking mixer according to claim 12, **characterised in that** said safety means comprise at least one Hall effect sensor (16) mounted on the support (49) and at least one magnetic rod (15) installed in a guiding configuration (80) formed in a securing portion (73) of a handle (4) attached to an outer wall of the container (2), said magnetic rod (15) being installed so that it is moved downwards against the force of a spring (46) by said appendage of cover (3) to a position in which a lower end of the magnetic rod (15) is sufficiently close to said Hall effect sensor (16) to be detected, said appendage being in the form of a pusher tab (75).

14. Food-cooking mixer according to claim 13, **characterised in that** said pusher tab (75) comprises an aperture (77) adapted to latch a catch pawl (78) attached to a movable piece (39) mounted inside the handle (4) so as to move between a retention position, in which said pawl (78) is latched in the aperture (77) of the pusher tab (75) to retain the cover (3) in a closed position, and a released position, in which the pawl (78) is separated from the pusher tab (75), a spring (79) being included to permanently push the mentioned movable piece (39) towards its retention position, and the movable piece (39) having a trigger (43) that projects though an aperture (42) formed in the handle (4), said trigger (43) being adapted to be pushed against the thrust of said spring (79) to unlatch the pawl (78) from the aperture (77) of the pusher tab (75).

15. Food-cooking mixer according to claim 13, **characterised in that** it also includes an accessory steam cooking tray (14) adapted to replace said cover (3), said steam cooking tray (14) having a pusher tab (20) adapted to move the magnetic rod (15) downwards.

16. Food-cooking mixer according to claim 1, **characterised in that** the container (2) has a lower cylindrical portion and the ferromagnetic portion (22) of the container (2) comprises a ferromagnetic layer applied to said lower cylindrical portion, said induction heater device (6) being arranged in such a manner that at least partially surrounds the lower magnetic portion of the container (2) where said ferromagnetic layer (22) is found.

17. Food-cooking mixer according to claim 1, **characterised in that** it includes a basket (26) able to be inserted inside the container (2), said basket (26) comprising a side wall and a bottom provided with a plurality of holes, and an outwards extending flange (81) around its mouth, said flange (81) being adapted to be supported on the mouth of the container (2) so that the bottom of the basket (26) is above the stirrers or blades (10) without interfering therewith, the flange (81) including a notch (29) adapted to receive a latch configuration (25) formed in one end of a accessory handle (23).

18. Food-cooking mixer according to claim 17, **characterised in that** it includes a spatula tip (24) having a prominence (84) adapted to fit into an open end of the handle (23), and a rib (82) formed around said prominence (84) to receive an edge of said open end of the handle, the handle (23) and said spatula tip (24) coupled together forming a spatula assembly (19).

19. Food-cooking mixer according to claim 1, **characterised in that** it comprises at least one supply and control electronic circuit for providing electric power and controlling said driving means, heat energy transferring means and other mixer systems, said means and systems being arranged inside a casing (1) mounted on the base structure (48), operation selection means (5) and a display (8) in connection with said supply and control electronic circuit being available on said casing.

20. Food-cooking mixer according to claim 19, **characterised in that** the supply and control electronic circuit is adapted to control the power supplied to the induction heater device (6) by signal chopping.

21. Food-cooking mixer according to claim 19, **characterised in that** the supply and control electronic circuit includes at least one microprocessor adapted to execute different cooking programs and/or digital recipe programs held in internal or removable memory.

22. Food-cooking mixer according to claim 21, **characterised in that** the supply and control electronic circuit includes a communication module adapted to be connected to a computer or network for locating and downloading said digital recipe programs that can be run by the supply and control electronic circuit.

## Patentansprüche

1. Lebensmittelzubereitungsmischer zur Verarbeitung und Zubereitung von Speisen, mit:
einem Unterbau (48), auf dem ein Aufsatz (49) befestigt ist, der einen Behälter (2) mit zu verarbeitenden Lebensmitteln trägt;
motorisierten Antriebsmitteln, mit denen im Behälter (2) abnehmbar angeordnete Rühr- oder Schneidmittel gedreht werden können;
Wärmeenergieübertragungsmittel, mit denen im Behälter (2) enthaltene zu verarbeitende Lebensmittel erhitzt werden können; sowie
Wägemittel zum Wiegen des von dem Aufsatz (49) getragenen Behälters (2) und dessen Inhalts,
**dadurch gekennzeichnet, dass**
der Behälter (2) mindestens einen ferromagnetischen Teil (22) aufweist und die Wärmeenergieübertragungsmittel eine Induktionsheizvorrichtung (6) aufweisen, die am Unterbau (48) befestigt ist, wobei die Induktionsheizvorrichtung (6) von dem Aufsatz (49) getrennt und in einem vorgegebenen Abstand zum ferromagnetischen Teil (22) des Behälters (2) angeordnet ist; und dass
der Aufsatz (49) von den Wägemitteln getragen wird, die am Unterbau (48) befestigt sind, so dass das Gewicht der Induktionsheizvorrichtung (6) vom Wägevorgang ausgeschlossen ist.

2. Lebensmittelzubereitungsmischer nach Anspruch 1, **dadurch gekennzeichnet, dass** die Rühr- und Schneidmittel Rührer oder Schneiden (10) aufweisen, die im Behälter (2) drehbar mit einer Radialwelle (50) angeordnet sind, wobei die Radialwelle (50) mit einem ersten Kopplungselement (51) verbunden ist, das durch eine Öffnung (12) im Boden des Behälters (2) nach unten vorsteht, wobei die Antriebsmittel einen Motor (33) aufweisen, der eine Getriebewelle (36) dreht, von dem ein Ende mit einem zweiten Kopplungselement (52) verbunden ist, das mit dem ersten Kopplungselement (51) der Radialwelle (50) beim Abstützen des Behälters (2) auf dem Aufsatz (49) gekoppelt werden kann.

3. Lebensmittelzubereitungsmischer nach Anspruch 2, **dadurch gekennzeichnet, dass** der Motor (33), die Getriebewelle (36) und ein mechanisches Getriebe (28, 32, 35) auf einem Fahrgestell (53), an dem der Aufsatz (49) befestigt ist, so angeordnet sind, dass sie miteinander verbunden werden können, wobei das zweite Kopplungselement (52) in solch einer Stellung angeordnet ist, dass es beim Abstützen des Behälters (2) auf dem Aufsatz (49) und beim Abstützen des Fahrgestells (53) auf den Wägemitteln mit dem ersten Kopplungselement (51) gekoppelt werden kann.

4. Lebensmittelzubereitungsmischer nach Anspruch 2, **dadurch gekennzeichnet, dass** der Motor (33) auf einem Aufsatz (54) montiert ist, der am Unterbau (48) befestigt ist, während eine Antriebswelle (58), die Getriebewelle (36) und ein mechanisches Getriebe (28, 32, 35) auf einem an dem Aufsatz (49) befestigten Fahrwerk (53) so montiert sind, dass sie miteinander verbunden werden können, wobei das zweite Kopplungselement (52) in solch einer Stellung angeordnet ist, dass es beim Abstützen des Behälters (2) auf dem Aufsatz (49) und beim Abstützen des Fahrgestells (53) auf dem Wägemittel mit dem genannten ersten Kopplungselement (51) gekoppelt werden kann, wobei Antriebskopplungsmittel (56, 57) vorgesehen sind, die zur Kopplung und Entkopplung einer Abtriebswelle (55) des Motors (33) mit bzw. von der Antriebswelle (58) von einer Antriebsvorrichtung (59) angetrieben werden.

5. Lebensmittelzubereitungsmischer nach Anspruch 4, **dadurch gekennzeichnet, dass** die Antriebskopplungsmittel (56, 57) erste und zweite Antriebskopplungsmittelelemente (56, 57) aufweisen, die mit der Abtriebswelle (55) des Motors (33) bzw. der Antriebswelle (58) verbunden sind, wobei mindestens eines der ersten und zweiten Antriebskopplungselemente (56, 57) so montiert ist, dass es zur Kopplung und Entkopplung von dem anderen der ersten und zweiten Antriebskopplungselemente (56, 57) über eine Antriebsvorrichtung (59) axial verschiebbar ist.

6. Lebensmittelzubereitungsmischer nach Anspruch 2, **dadurch gekennzeichnet, dass** der Motor (33), die Getriebewelle (36) und ein mechanisches Getriebe (28, 32, 35) auf dem Unterbau (48) so montiert sind, dass sie miteinander verbunden werden können, wobei das zweite Kopplungselement (52) zur Kopplungswelle (36) axial verschiebbar ist und zur Kopplung und Entkopplung des ersten und zweiten Kopplungselements (51, 52) von einer Antriebsvorrichtung (60) angetrieben wird.

7. Lebensmittelzubereitungsmischer nach Anspruch 2, **dadurch gekennzeichnet, dass** der Motor (33) auf dem Unterbau (48) montiert ist, wobei eine Abtriebswelle (55) des Motors (33) beim Abstützen des Behälters (2) auf dem Aufsatz (49) zur Radialwelle (50) der Rührer oder Schneiden (10) ausgerichtet ist, wobei das zweite Kopplungselement (52) koaxial mit der Abtriebswelle (55) des Motors (33) verbunden ist, wobei mindestens eines der ersten und zweiten Kopplungselemente (51, 52) so montiert ist, dass es zur Kopplung und Entkopplung von dem anderen der ersten und zweiten Kopplungselemente (51, 52) über eine Antriebsvorrichtung (59) axial verschiebbar ist.

8. Lebensmittelzubereitungsmischer nach Anspruch 2, **dadurch gekennzeichnet, dass** die Radialwelle (50) für die Rührer bzw. Schneiden (10) auf einem abnehmbaren Trägerkörper (63) montiert ist und zusammen mit dem ersten Kopplungselement (51) einen abnehmbaren Rühr- bzw. Schneidaufbau bildet, der innerhalb des Behälters (2) über einen Nockenmechanismus befestigt ist, der in einem am Boden des Behälters (2) äußerlich abnehmbar befestigten Auflagestück (62) gelagert ist.

9. Lebensmittelzubereitungsmischer nach Anspruch 8, **dadurch gekennzeichnet, dass** der Trägerkörper (63) einen unteren Teil, von dem zumindest zwei diametral entgegengesetzte Achszapfen (64) radial hervorstehen, und einen oberen Teil aufweist, durch den eine Stufe definiert ist, die mit einer Ringdichtung (65) versehen ist, wobei der untere Teil des Trägerkörpers (63) mit den Achszapfen (64) an einem Ende der das erste Kopplungselement (51) tragenden Radialwelle (50) durch die Öffnung (12) des Behälters (2) geführt wird und der obere Teil des Trägerkörpers (63) mit der Ringdichtung (65) bei Betriebsstellung des Rührer- bzw. Schneidaufbaus innerhalb des Behälters (2) mit einem die Öffnung (12) umgebenden Bereich am Boden des Behälters (2) in Berührung steht.

10. Lebensmittelzubereitungsmischer nach Anspruch 9, **dadurch gekennzeichnet, dass** der Nockenmechanismus einen an dem Auflagestück (62) montierten Hebel (69), so dass dieser bezüglich einer zur Radialwelle (50) des Rühr- bzw. Schneidaufbaus senkrechten Welle (70) zwischen einer geöffneten Stellung und einer geschlossenen Stellung drehbar ist, und ein Nockenpaar (71) aufweist, das mit dem Hebel (69) in solch einer Stellung gekoppelt sind, dass bei Kopplung des Auflagestücks (62) mit dem Behälter (2) und Drehung des Hebels (69) aus der geschlossenen Stellung das Nockenpaar (71) mit beiden Achszapfen (64) des Rühr- bzw. Schneidaufbaus gekoppelt wird, wodurch der Trägerkörper (63) in einer Betriebsstellung innerhalb des Behälters (2) gehalten wird, und das Nockenpaar (71) die Ringdichtung (65) zwischen den Trägerkörper (63) und den Boden des Behälters (2) presst und bei Drehung des Hebels (69) aus der geschlossenen Stellung in die geöffnete Stellung beide Achszapfen (64) freigibt, wodurch der Rühr- bzw. Schneidaufbau heraus genommen und das Auflagestück (62) vom Behälter (2) abgelöst werden kann.

11. Lebensmittelzubereitungsmischer nach Anspruch 10, **dadurch gekennzeichnet, dass** der Hebel (69) einen zwischen den Nocken (71) gebildeten Durchgang aufweist, über den bei geschlossener Stellung des Hebels (69) Zugang zum ersten Kopplungselement (51) ermöglicht wird, wodurch das erste Kopplungselement (51) bei Befestigung des Behälters (2) an dem Aufsatz (49) mit dem zweiten Kopplungselement (52) gekoppelt werden kann.

12. Lebensmittelzubereitungsmischer nach Anspruch 1, **dadurch gekennzeichnet, dass** im Behälter (2) ein Deckel (3) und Sicherheitsmittel eingebaut sind, die mit einem Fortsatz des Deckels (3) zusammenarbeiten, damit bei Schließen des Behälters (2) durch den angebauten Deckel (3) auf eine nicht der Vorgabe entsprechenden Weise der Betrieb der Antriebsmittel und/oder des Wärmeenergieübertragungsmittels gesperrt ist.

13. Lebensmittelzubereitungsmischer nach Anspruch 12, **dadurch gekennzeichnet, dass** die Sicherheitsmittel mindestens einen an dem Aufsatz (49) montierten Halleffektsensor (16) und mindestens einen Magnetstab (15) aufweisen, der in einer Führungsanordnung (80) installiert ist, die in einem an einer Außenwand des Behälters (2) befestigten Sicherheitsteil (73) eines Griffs (4) ausgebildet ist, wobei der Magnetstab (15) so installiert ist, dass er gegen die Kraft einer Feder (46) von dem Fortsatz des Deckels (3) in eine Stellung verschiebbar ist, bei der sich das untere Ende des Magnetstabs (15) so nahe am Halleffektsensor (16) befindet, dass es durch diesen erfasst werden kann, wobei der Fortsatz in Form eines Ausstoßstreifens (75) vorliegt.

14. Lebensmittelzubereitungsmischer nach Anspruch 13, **dadurch gekennzeichnet, dass** der Ausstoßstreifen (75) eine Öffnung (77) aufweist, in die eine Sperrklinke (78) einrasten kann, die an einem beweglichen Stück (39) befestigt ist, das in den Griff (4) eingebaut ist, damit diese zwischen einer verriegelten Stellung, bei der die Klinke (78) in der Öffnung (77) des Ausstoßstreifens (75) eingerastet ist und den Deckel (3) somit in geschlossener Stellung hält und einer entriegelten Stellung, bei der die Klinke (78) vom Ausstoßstreifen (75) abgelöst ist, verschiebbar ist, wobei eine Feder (79) eingebaut ist, durch die das genannte bewegliche Stück (39) dauernd in Richtung ihrer verriegelten Stellung gedrückt wird, und das bewegliche Stück (39) einen Auslöser (43) aufweist, der sich durch eine im Griff (4) ausgebildete Öffnung (42) erstreckt, wobei der Auslöser (43) gegen die Spannkraft der Feder (79) gedrückt werden kann und dabei die Klinke (78) aus der Öffnung (77) des Ausstoßstreifens (75) ausrastet.

15. Lebensmittelzubereitungsmischer nach Anspruch 13, **dadurch gekennzeichnet, dass** er außerdem einen Zusatzdampfkochboden (14) aufweist, der den Deckel (3) ersetzen kann, wobei der Dampfkochboden (14) einen Ausstoßstreifen (20) aufweist, mit dem der Magnetstab (15) nach unten gefahren werden kann.

16. Lebensmittelzubereitungsmischer nach Anspruch 1, **dadurch gekennzeichnet, dass** der Behälter (2) einen unteren zylindrischen Teil besitzt und der ferromagnetische Teil (22) des Behälters (2) eine ferromagnetische Schicht aufweist, die auf den unteren zylindrischen Teil aufgetragen wurde, wobei die Induktionsheizvorrichtung (6) so angeordnet ist, dass sie zumindest teilweise den unteren magnetischen Teil des Behälters (2), auf dem sich die ferromagnetische Schicht (22) befindet, umgibt.

17. Lebensmittelzubereitungsmischer nach Anspruch 1, **dadurch gekennzeichnet, dass** er einen Einsatz (26) aufweist, der in den Behälter (2) eingesetzt werden kann, wobei der Einsatz (26) eine Seitenwand und einen Boden mit mehreren Löchern sowie einen sich nach außen erstreckenden Flansch (81) um dessen Öffnung herum aufweist, wobei der Flansch (81) an der Öffnung des Behälters (2) aufliegt, so dass sich der Boden des Einsatzes (26) oberhalb der Rührer bzw. Schneiden (10) befindet, ohne diese zu stören, und der Flansch (81) eine Kerbe zur Aufnahme einer an einem Ende eines Zusatzgriffs (23) ausgebildeten Einrastanordnung (25) aufweist.

18. Lebensmittelzubereitungsmischer nach Anspruch 17, **dadurch gekennzeichnet, dass** er eine Spatelspitze (24) mit einer Erhöhung (84), die in ein offenes Ende des Griffs (23) passt, sowie eine um die Erhöhung (84) herum ausgebildete Rippe zur Aufnahme einer Kante des offenen Endes des Griffs aufweist, wobei der Griff (23) und die Spatelspitze (24) so miteinander gekoppelt sind, dass sie einen Spatelaufbau (19) bilden.

19. Lebensmittelzubereitungsmischer nach Anspruch 1, **dadurch gekennzeichnet, dass** er mindestens eine elektronische Versorgungs- und Steuerschaltung zur elektrischen Stromversorgung und Steuerung der Antriebsmittel, Wärmeenergieübertragungsmittel und anderer Mischeranlagen aufweist, wobei die Mittel und Anlagen in einem Gehäuse (1) angeordnet sind, das am Unterbau (48) befestigt ist, wobei an dem Gehäuse Betriebsauswahlmittel (5) sowie eine zur elektronischen Versorgungs- und Steuerschaltung gehörende Anzeige (8) angebracht sind.

20. Lebensmittelzubereitungsmischer nach Anspruch 19, **dadurch gekennzeichnet, dass** mit der elektronischen Versorgungs- und Steuerschaltung die an die Induktionsheizvorrichtung (6) gelieferte Stromversorgung mittels Signalaufteilung gesteuert wird.

21. Lebensmittelzubereitungsmischer nach Anspruch 19, **dadurch gekennzeichnet, dass** in der elektronischen Versorgungs- und Steuerschaltung mindestens ein Mikroprozessor zur Ausführung verschiedener Kochprogramme und/oder digitaler Rezeptprogramme eingebaut ist, die sich einem internen oder abnehmbaren Speicher befinden.

22. Lebensmittelzubereitungsmischer nach Anspruch 21, **dadurch gekennzeichnet, dass** in der elektronischen Versorgungs- und Steuerschaltung ein von der elektronischen Versorgungs- und Steuerschaltung betriebenes Kommunikationsmodul eingebaut ist, das zwecks Lokalisierung und Herunterladen der digitalen Rezeptprogramme an einen PC oder an ein Netzwerk angeschlossen werden kann.

## Revendications

1. Un robot pour mélanger et cuire des aliments du genre comportant:
une structure de base (48) sur laquelle est monté un support (49) adapté pour soutenir un récipient (2) contenant des aliments à traiter;
des moyens d'entraînement motorisés adaptés pour faire tourner des moyens mélangeurs ou tranchants amovibles à l'intérieur de ce récipient (2);
des moyens de transfert d'énergie thermique adaptés pour chauffer ces aliments à traiter à l'intérieur du récipient (2); et
des moyens de pesage pour peser le récipient (2) et son contenu soutenus par ce support (49);
**caractérisée en ce que**:
le récipient (2) comporte au moins une portion ferromagnétique (22) et ces moyens de transfert d'énergie thermique comportent un dispositif chauffant à induction (6) monté sur cette structure de base (48) ce dispositif chauffant à induction (6) étant écarté du support (49) et aménagé à une distance prédéterminée de cette portion ferromagnétique (22) du récipient (2); et **en ce que**
ce support (49) est supporté sur ces moyens de pesage, qui sont montés sur cette structure de base (48), de sorte que le poids du dispositif chauffant à induction (6) est exclu du pesage.

2. Un robot pour mélanger et cuire des aliments conformément à la revendication 1, **caractérisée en ce que** ces moyens mélangeurs ou tranchants comportent des mélangeurs-agitateurs ou lames (10) montés pour tourner avec un axe tournant (50) à l'intérieur du récipient (2), cet axe tournant (50) étant relié à un premier élément de couplage (51) qui dépasse vers l'avant à travers une ouverture (12) au fond du récipient (2), ces moyens d'entraînement comportant un moteur (33) adapté pour faire tourner un arbre de transmission (36) ayant une extrémité reliée a un deuxième élément de couplage (52) capable d'engager ce premier élément de couplage (51) de l'axe tournant (50) lorsque le récipient (2) est soutenu par le support (49).

3. Un robot pour mélanger et cuire des aliments conformément à la revendication 2, **caractérisée en ce que** ce moteur (33), cet arbre de transmission (36) et une transmission mécanique (28, 32, 35) pour la liaison entre eux sont montés sur un châssis (53) auquel le support (49) est fixé, ce deuxième élément de couplage (52) étant aménagé dans une position appropriée pour engager ce premier élément de couplage (51) lorsque le récipient (2) est soutenu par le support (49) et ce châssis (53) est soutenu par ces moyens de pesage.

4. Un robot pour mélanger et cuire des aliments conformément à la revendication 2 **caractérisée en ce que** ce moteur (33) est monté sur un support (54) fixé à la structure de base (48) tandis qu'un axe primaire (58), cet arbre de transmission (36) et une transmission mécanique (28, 32, 35) pour la liaison entre eux sont montés sur un châssis (53) fixé au support (49), ce deuxième élément de couplage (52) étant aménagé dans une position appropriée pour engager ce premier élément de couplage (51) lorsque le récipient (2) est soutenu par le support (49) et ce châssis (53) est soutenu sur ces moyens de pesage, des moyens de couplage primaires (56, 57) étant pourvus entraînés par un dispositif d'entraînement (59) pour coupler et découpler un axe de sortie (55) du moteur (33) à et de cet axe primaire (58).

5. Un robot pour mélanger et cuire des aliments conformément à la revendication 4, **caractérisée en ce que** ces moyens de couplage primaires (56, 57) comportent des premier et deuxième éléments primaires de couplage (56, 57) reliés à cet axe de sortie (55) du moteur (33) et à l'axe primaire (58), respectivement, au moins un de ces premier et deuxième éléments primaires de couplage (56, 57) étant montés de sorte qu'il puisse être déplacé axialement par ce moyen d'entraînement (59) pour coupler et découpler les premier et deuxième éléments primaires de couplage (56, 57) entre eux.

6. Un robot pour mélanger et cuire des aliments conformément à la revendication 2, **caractérisée en ce que** ce moteur (33), cet arbre de transmission (36) et une transmission mécanique (28, 32, 35) pour la liaison entre eux sont montés sur cette structure de base (48), ce deuxième élément de couplage (52) étant axialement déplaçable par rapport à l'axe de couplage (36) et entraîné par un dispositif d'entraînement (60) pour coupler et découpler les premier et deuxième éléments de couplage (51, 52).

7. Un robot pour mélanger et cuire des aliments conformément à la revendication 2, **caractérisée en ce que** ce moteur (33) est monté sur cette structure de base (48) un axe de sortie (55) du moteur (33) étant aligné sur l'axe tournant (50) de ces mélangeurs-agitateurs ou lames (10) lorsque le récipient (2) est soutenu par le support (49), ce deuxième élément de couplage (52) étant coaxialement relié à cet axe de sortie (55) du moteur (33), au moins un de ces premier et deuxième éléments de couplage (51, 52) étant monté pour être axialement déplacé par ce dispositif d'entraînement (59) pour coupler et découpler les premier et deuxième éléments de couplage (51, 52) entre eux.

8. Un robot pour mélanger et cuire des aliments conformément à la revendication 2, **caractérisée en ce que** cet axe tournant (50) pour les mélangeurs-agitateurs ou lames (10) est monté sur un corps de support amovible (63) et avec le premier élément de couplage (51) il forme un ensemble mélangeur ou tranchant amovible adapté pour être fixé à l'intérieur du récipient (2) par un mécanisme de cames logé dans une pièce de base (62) adaptée pour être reliée extérieurement amovible au fond du récipient (2).

9. Un robot pour mélanger et cuire des aliments conformément à la revendication 8, **caractérisée en ce que** le corps de support (63) possède une portion inférieure d'où au moins deux articulations diamétralement opposées (64) dépassent radialement et une portion supérieure définit un gradin sur lequel un joint (65) est fixé, cette portion inférieure du corps de support (63) ayant ces articulations (64) et une extrémité de l'axe tournant (50) portant le premier élément de couplage (51) étant engagés à travers cette ouverture (12) du récipient (2) et cette portion supérieure du corps de support (63) ayant le joint (65) étant en contact avec une région du fond du récipient (2) autour de l'ouverture (12) lorsque cet ensemble mélangeur ou tranchant est installé en position de fonctionnement à l'intérieur du récipient (2).

10. Robot pour mélanger et cuire des aliments conformément à la revendication 9, **caractérisée en ce que** ce mécanisme à cames comporte un levier (69) monté sur cette pièce de base (62) de sorte qu'il tourne par rapport à un axe (70) perpendiculaire à l'axe tournant (50) de l'ensemble mélangeur ou tranchant entre une position ouverte et une position fermée et une paire de cames (71) couplées à ce levier (69) dans une position telle que, lorsque la pièce de base (62) est couplée au récipient (2) et le levier (69) est tourné à partir de cette position fermée, cette paire de cames (71) est engagée dans les deux articulations (64) de l'ensemble mélangeur ou tranchant en maintenant le corps de support (63) en position de fonctionnement à l'intérieur du récipient (2) et le joint (65) est pressé entre le corps de support (63) et le fond du récipient (2) et lorsque le levier (69) tourne de la position fermée à la position ouverte, la paire de cames (71) libère les deux articulations (64) l'ensemble mélangeur ou tranchant pouvant ainsi être retiré et la pièce de base (62) être écartée du récipient (2).

11. Robot pour mélanger et cuire des aliments conformément à la revendication 10, **caractérisée en ce que** le levier (69) possède un passage formé entre les cames (71), ce passage permettant, lorsque le levier (69) est à la position fermée, un accès au premier élément de couplage (51) le premier élément de couplage (51) pouvant être ainsi engagé dans le deuxième élément de couplage (52) lorsque le récipient (2) est monté sur le support (49).

12. Robot pour mélanger et cuire des aliments conformément à la revendication 1, **caractérisée en ce que** le récipient (2) incorpore un couvercle (3) et des moyens de sécurité qui coopèrent avec un appendice de ce couvercle (3) pour empêcher le fonctionnement des moyens d'entraînement et/ou des moyens de transfert d'énergie thermique si le couvercle (3) n'est pas monté pour fermer le récipient (2) d'une façon prédéterminée.

13. Robot pour mélanger et cuire des aliments conformément à la revendication 12, **caractérisée en ce que** ces moyens de sécurité comportent au moins un capteur à effet Hall (16) monté sur le support (49) et au moins une tige magnétique (15) installée dans une configuration de guidage (80) formée dans une portion de sécurité (73) d'un manche (4) fixé sur une paroi extérieure du récipient (2), cette tige magnétique (15) étant installée de sorte qu'elle est déplacée vers le bas en allant à l'encontre de la force d'un ressort (46) par cet appendice du couvercle (3) à une position à laquelle une extrémité inférieure de la tige magnétique (15) est suffisamment proche de ce capteur à effet Hall (16) pour être détectée, cet appendice ayant la forme d'une patte-poussoir (75).

14. Robot pour mélanger et cuire des aliments conformément à la revendication 13, **caractérisée en ce que** cette patte-poussoir (75) comporte une ouverture (77) adaptée pour engager un doigt d'encliquetage (78) fixé sur une pièce mobile (39) montée à l'intérieur du manche (4) de sorte a être déplacé entre une position de retenue, dans laquelle ce doigt (78) est engagé dans l'ouverture (77) de la patte-poussoir (75) pour retenir le couvercle (3) en position fermée et une position dégagée, dans laquelle le doigt (78) est écarté de la patte-poussoir (75), un ressort (79) étant inclus pour pousser en permanence ladite pièce mobile (39) vers sa position de retenue et la pièce mobile (39) ayant une manette (43) qui est projetée à travers une ouverture (42) formée dans le manche (4), cette manette (43) étant adaptée pour être poussée à l'encontre de la poussée de ce ressort (79) pour dégager le doigt (78) de l'ouverture (77) de la patte-poussoir (75).

15. Robot pour mélanger et cuire des aliments conformément à la revendication 13, **caractérisée en ce qu'**elle comporte également une surface de cuisson à la vapeur accessoire (14) adaptée pour remplacer ce couvercle (3), cette surface de cuisson à la vapeur (14) ayant une patte-poussoir (20) adaptée pour déplacer la tige magnétique (15) vers le bas.

16. Robot pour mélanger et cuire des aliments conformément à la revendication 1, **caractérisée en ce que** le récipient (2) possède une portion cylindrique inférieure et la portion ferromagnétique (22) du récipient (2) comporte une couche ferromagnétique appliquée sur cette portion cylindrique inférieure, ce dispositif chauffant à induction (6) étant aménagé de sorte qu'il entoure au moins en partie la portion magnétique inférieure du récipient (2) où se trouve cette couche ferromagnétique (22).

17. Robot pour mélanger et cuire des aliments conformément à la revendication 1, **caractérisée en ce qu'**elle comporte un panier (26) capable d'être introduit dans le récipient (2), ce panier (26) comportant une paroi latérale et un fond percé d'une pluralité d'orifices et un rebord s'étendant vers l'extérieur (81) autour de son ouverture, ce rebord (81) étant adapté pour être supporté sur l'ouverture du récipient (2) de sorte que le fond du panier (26) se trouve au-dessus des mélangeurs-agitateurs ou lames (10) sans les gêner, le rebord (81) comportant une encoche (29) adaptée pour y recevoir une configuration d'encliquetage (25) formée à une extrémité d'un manche accessoire (23).

18. Robot pour mélanger et cuire des aliments conformément à la revendication 17, **caractérisée en ce qu'**elle comporte une pointe de spatule (24) ayant une bosse (84) adaptée pour être engagée dans une extrémité ouverte du manche (23) et une nervure (82) formée autour de cette bosse (84) pour y recevoir un bord de cette extrémité ouverte du manche, le manche (23) et cette pointe de spatule (24) étant couplés l'un à l'autre en formant un ensemble de spatule (19).

19. Robot pour mélanger et cuire des aliments conformément à la revendication 1, **caractérisée en ce qu'**elle comporte au moins un circuit électronique d'alimentation et de contrôle pour fournir du courant électrique et contrôlant ces moyens d'entraînement, des moyens de transfert d'énergie thermique et d'autres systèmes mélangeurs, ces moyens et systèmes étant aménagés à l'intérieur d'un boîtier (1) monté sur la structure de base (48), des moyens de sélection de fonctionnement (5) et d'affichage (8) reliés à ce circuit électronique d'alimentation et de contrôle étant disponibles dans ce boîtier.

20. Robot pour mélanger et cuire des aliments conformément à la revendication 19, **caractérisée en ce que** le circuit électronique d'alimentation et de contrôle est adapté pour contrôler le courant alimenté au dispositif chauffant à induction (6) par interruption de signaux.

21. Robot pour mélanger et cuire des aliments conformément à la revendication 19, **caractérisée en ce que** le circuit électronique d'alimentation et de contrôle comporte au moins un microprocesseur adapté pour exécuter différents programmes de cuisson et/ou des programmes de recettes numériques conservées dans la mémoire interne ou amovible.

22. Robot pour mélanger et cuire des aliments conformément à la revendication 21, **caractérisée en ce que** le circuit électronique d'alimentation et de contrôle comporte un module de communication adapté pour être relié à un ordinateur ou à un réseau pour localiser et télécharger ces programmes de recettes numériques pouvant être utilisés par le circuit électronique d'alimentation et de contrôle.
